# EUROPÄISCHE PATENTSCHRIFT

(11) **EP 1 241 469 B1**
(45) Veröffentlichungstag und Bekanntmachung des Hinweises auf die Patenterteilung: **29.07.2009**
(21) Anmeldenummer: 02004050.7
(22) Anmeldetag: 23.02.2002
(51) Int. Cl.: G01N 22/04, A24C 5/34, G01N 22/00

(54) **Mikrowellenresonatoreinrichtung für Messungen an Tabak**
Microwave resonator device for measurements on tobacco
Dispositif résonateur hyperfréquence pour des mesures sur du tabac

(30) Priorität: 15.03.2001 DE 10112499; 22.11.2001 DE 10157266
(43) Veröffentlichungstag der Anmeldung: 18.09.2002
(60) Teilanmeldung: 09000639.6
(73) Patentinhaber: Hauni Maschinenbau AG, 21033 Hamburg (DE)
(72) Erfinder: Möller, Henning, 22605 Hamburg (DE); Tobias, Jörg, 21423 Drage (DE); Taute, Wolfgang, 24235 Laboe (DE); Knöchel, Reinhard, 25336 Elmshorn (DE)
(74) Vertreter: Seemann, Ralph

(56) Entgegenhaltungen:
- EP-A- 0 511 651
- EP-A1- 0 468 057
- EP-A1- 0 665 426
- EP-A1- 0 973 025
- WO-A1-00/04375
- DE-A1- 4 342 288
- DE-A1- 19 705 260
- GB-A- 1 526 732
- US-A- 4 890 054
- US-A- 5 049 812
- US-A- 5 389 883
- US-A- 5 500 599
- US-A- 5 736 864
- E. NYFORS & P. VAINIKAINEN: "Industrial Microwave Sensors" 1989, XP002334964 US
- D. NÜHRMANN: "Das grosse Werkbuch Elektronik" Bd. 3, 1994, Deutschland

## Beschreibung

Die Erfindung betrifft eine Resonatoreinrichtung für die Prüfung einer Materialmenge, wobei die Materialmenge ein Materialstrom der Tabak verarbeitenden Industrie ist, auf Vorhandensein wenigstens eines Fremdmaterials und/oder für die Erfassung der Masse, Dichte und/oder der Feuchte der Materialmenge, mit einem Resonatorgehäuse, das eine Durchtrittsöffnung für die Materialmenge aufweist,
wobei die Materialmenge wenigstens teilweise in einen Prüfbereich überführbar ist, wobei wenigstens ein die Energiedichte von elektromagnetischen Wellen erhöhendes Element vorgesehen ist, wobei die Energiedichte in wenigstens einem Teil des Prüfbereichs erhöhbar ist.

Eine entsprechende Resonatoreinrichtung bzw. ein Resonatorgehäuse für Mikrowellen ist aus der DE 198 54 550 A1 der Anmelderin bekannt. In diesem Dokument wird ein von einem Strang der Tabak verarbeitenden Industrie durchsetztes Resonatorgehäuse beschrieben, dem Mikrowellen zwecks Erfassung der Masse und/oder Feuchte des Strangmaterials zugeführt sind. Der mit diesem Resonatorgehäuse verfolgte Zweck besteht darin, die Messgenauigkeit und ggf. Messempfindlichkeit bei der Erfassung der Masse und/oder Feuchte von Füllermaterialien von Strängen der Tabak verarbeitenden Industrie zu verbessern. Dieses wird gem. der DE 198 54 550 A1 dadurch erreicht, dass das Gehäuse zumindest teilweise aus einem Material mit einem niedrigen Ausdehnungskoeffizienten besteht, so dass bei entsprechender Temperaturschwankung das Gehäuse eine im Wesentlichen gleiche Größe behält. Der Verbesserung der Messgenauigkeit dient es auch, wenn die Temperatur des Resonatorgehäuses auf einen konstanten Wert geregelt wird. Schließlich ist es gem. diesem Dokument vorteilhaft, wenn die Wände des Innenraumes des Gehäuses zumindest teilweise mit einem korrosionsbeständigen Metall beschichtet sind oder aus einem derartigen Metall bestehen. Hierdurch lassen sich die Messgenauigkeiten bei der Masse und/oder Feuchteerfassung der o.g. Materialien erheblich verbessern.

Aus der DE 101 00 664.0 der Anmelderin ist ferner ein Verfahren zum Prüfen eines Produktionsmaterials bzw. einer Materialmenge bekannt, die hauptsächlich ein Produktionsmaterial enthält, wobei das Vorhandensein eines Fremdmaterials in dieser Menge geprüft wird, und wobei ein Mikrowellenfeld erzeugt wird, die Materialmenge in den Wirkbereich des Mikrowellenfeldes eingebracht und die Beeinflussung des Mikrowellenfeldes analysiert wird, wobei die Ist-Werte einer ersten und einer zweiten charakteristischen Größe des Mikrowellenfeldes gleichzeitig gemessen werden, wobei ein zulässiger Wertebereich für diese Ist-Werte vorgegeben wird, und wobei geprüft wird, ob die Ist-Werte in dem zulässigen Wertebereich liegen und wobei ein Signal erzeugt wird, wenn die Ist-Werte nicht in dem zulässigen Wertebereich liegen. Als Größe des Mikrowellenfeldes werden im Rahmen der Anmeldung sowohl reale Größen des erzeugten Mikrowellenfeldes, wie Amplitude und Phase, bezeichnet als auch Größen eines das Mikrowellenfeld führenden Bauteiles, wie z.B. die Resonanzfrequenz und die Bandbreite eines Resonators, in dem sich das Mikrowellenfeld ausbreitet.

Bei dem bekannten Messverfahren wird das Messgut durch das Feld eines Resonators bewegt. Die dielektrischen Eigenschaften des Messgutes verändern das Feld. Durch Messung der Änderung der Resonanzeigenschaften bzw. des Feldes kann eine Bestimmung von z.B. Masse, Dichte und Feuchte sowie die Erkennung von Fremdkörpern erfolgen. Es ist hierbei schwierig, sehr kleine Fremdkörper zu erkennen bzw. eine relativ genaue Ortsauflösung zu erzielen. Insbesondere die Lage des Fremdkörpers im Verhältnis zum Feldverlauf bestimmt die Nachweisgenauigkeit.

In EP 0 468 057 A1 ist ein Hohlraumresonator offenbart, mittels dessen in einem länglichen Material, das sich durch das elektrische Feld des Resonators bewegt, kleine Metallstücke über elektrische Entladungen detektierbar sind.

US 5 389 883 A betrifft einen Hohlraumresonator mit einer helixförmigen Spule zur Messung der relativen Anteile von Öl, Wasser und Gas in einer Röhre. Es werden mehrere Resonatoren mit um die Röhre gewickelten Spulen verwendet, die jeweils auf unterschiedliche Resonanzfrequenzen abgestimmt sind oder unterschiedlich zur Röhre angeordnet sind.

Gemäß US 4 890 054 A weist das Gehäuse einer Mikrowellenresonatoreinrichtung zum Messen der physikalischen Eigenschaften eines Materials einen zentrierten Vorsprung auf, so dass das elektrische Feld in der Resonatoreinrichtung an dieser Stelle eingeschnürt wird, um die entsprechenden Eigenschaften des Materials zu messen.

Bei einer Vorrichtung zum Messen des Stroms von Tabak gemäß US 5 736 864 A im Hinblick auf die Masse und/oder den Feuchtegehalt sind zwei Resonatorvorrichtungen vorgesehen, die so genannte dielektrische Resonatoren aufweisen, um die Empfindlichkeit des Apparats zu erhöhen. An einem ersten Paar zusätzlicher Resonatoren wird eine Resonanzfrequenz eingestellt.

EP 0 511 651 A1 betrifft einen Flüssigkeitsmonitor, wobei die Flüssigkeit in einem Rohrsegment Teil einer dielektrischen Beladung eines Mikrowellenresonators ist. Das Gehäuse des Resonators weist eine Verengung in Form eines Fokussierstabes auf, so dass die Feldlinien am Ort des Rohrsegments gebündelt sind.

US 5 049 812 betrifft die Verwendung eines als Streifenleiter oder Mikrostreifenleiter ausgeführten offenen Ringresonators zur Charakterisierung von Proben.

Aufgabe der vorliegenden Erfindung ist es, eine Resonatoreinrichtung anzugeben, mittels der die Empfindlichkeit eines Verfahrens zur Bestimmung, ob ein Fremdmaterial in einem Materialstrom enthalten ist und/oder für die Erfassung der Masse, Dichte und/oder der Feuchte des Materialstromes oder der Materialmenge erhöht wird. Ferner ist es Aufgabe der vorliegenden Erfindung Mittel vorzusehen, mit denen die Genauigkeit und die Ortsauflösung entsprechender Messungen verbessert werden.

Gelöst wird diese Aufgabe durch eine Resonatoreinrichtung für die Prüfung einer Materialmenge, wobei die Materialmenge ein Materialstrom der Tabak verarbeitenden Industrie ist, auf Vorhandensein wenigstens eines Fremdmaterials und/oder für die Erfassung der Masse, Dichte und/oder der Feuchte der Materialmenge, mit einem Resonatorgehäuse, das eine Durchtrittsöffnung für die Materialmenge aufweist, wobei die Materialmenge wenigstens teilweise in einen Prüfbereich überführbar ist, wobei wenigstens ein die Energiedichte von elektromagnetischen Wellen erhöhendes Element vorgesehen ist, wobei die Energiedichte in wenigstens einem Teil des Prüfbereichs erhöhbar ist, die dadurch weitergebildet ist, dass das Element einen Leitungsresonator mit wenigstens einer als Elektrode fungierenden Endfläche umfasst, wobei der Leitungsresonator ein Metallstreifen ist, der zwei in Richtung des Prüfbereichs ausgerichtete Endflächen aufweist, wobei der Leitungsresonator ein offener Ring ist.

Durch diese Maßnahme ist es möglich, eine Art Bündelung der elektromagnetischen Wellen in dem Prüfbereich zu erzielen, wodurch ein erhöhter Fluss der entsprechenden Wellen wie insbesondere Mikrowellen durch das zu untersuchende Material bzw. den Bereich des zu untersuchenden Materialstromes fließt. Damit ist eine erhöhte Empfindlichkeit bei der Messung der Masse, Dichte und/oder der Feuchte des Materialstroms und/oder der Prüfung, ob ein Fremdmaterial vorhanden ist, gegeben, ohne dass mehr Energie in die Resonatoreinrichtung eingekoppelt werden müsste. Im Rahmen dieser Erfindung bedeutet die Energiedichte von elektromagnetischen Wellen zu vergrößern bzw. zu erhöhen, auch insbesondere, dass diese Wellen gebündelt, fokussiert, verengt bzw. verdichtet werden.

Durch Verwendung eines Leitungsresonators in Form eines Metallstreifens ist es möglich, auf einfache Art und effektive Weise die in den Resonator eingekoppelten Wellen zu bündeln, wobei insbesondere die Wellen bzw. das entsprechende Feld aus der Endfläche gebündelt austritt.

Da in dem als offener Ring ausgebildeten Leitungsresonator zwei Endflächen vorgesehen sind, wobei diese gegenüberliegend angeordnet sind, so dass der Materialstrom durch den Raum zwischen den Endflächen bewegbar ist, ist eine besonders gleichmäßige Bündelung der Wellen gegeben, wobei insbesondere eine sehr hohe Energiedichte möglich ist.

Bei den elektromagnetischen Wellen handelt es sich vorzugsweise um Mikrowellen. Vorzugsweise handelt es sich bei der Resonatoreinrichtung um eine Mikrowellenresonatoreinrichtung. Ein Materialstrom ist durch die erfindungsgemäße Resonatoreinrichtung prüfbar. Im Rahmen dieser Erfindung umfasst der Begriff Prüfbereich insbesondere auch den Begriff Messbereich. Der Prüfbereich istin der Resonatoreinrichtung angeordnet.

Vorzugsweise sind eine Einkoppelantenne und eine Auskoppelantenne vorgesehen, die vorzugsweise symmetrisch in der Resonatoreinrichtung angeordnet sind. Ferner sind die Antennen vorzugsweise in der Nähe einer Stelle des Leitungsresonators angeordnet, an der die Kopplung vermittelnde Feldkomponente eine hohe Amplitude, vorzugsweise ein Maximum aufweist.

Eine besonders gute Kopplung der auf das Element eingekoppelten Wellen und von dem Element ausgekoppelten Wellen ist gegeben, da das Element in einem Hohlraum der Resonatoreinrichtung beabstandet zu den den Hohlraum begrenzenden Wänden angeordnet ist.

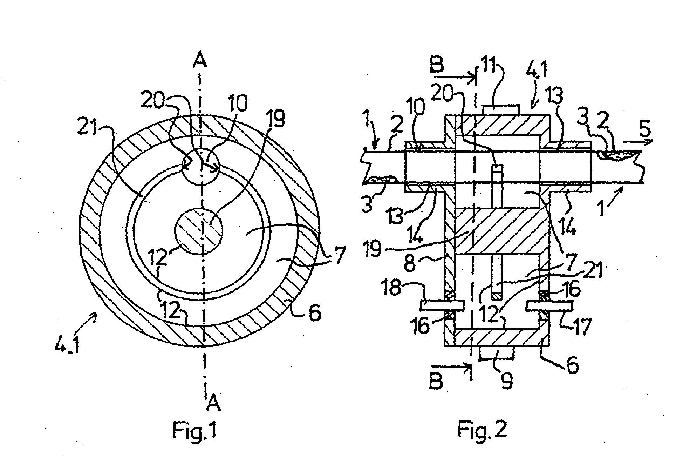

Ein besonders effektives Verfahren zum Prüfen des Materialstromes ist möglich, da die wenigstens eine Endfläche in der Nähe des Materialstroms bzw. des Prüfbereichs angeordnet ist. Vorzugsweise ist die Größe der Endfläche kleiner als der Bereich des Materialstroms, der sich in der Resonatoreinrichtung in einem Prüfbereich befindet, wobei eine Querschnittsfläche, die im Wesentlichen parallel zur Endfläche ist, Berücksichtigung findet. Hierbei ist der Materialstrom bspw. im Falle eines Materialstroms der Tabak verarbeitenden Industrie ein Tabakstrom, der vorzugsweise mit einem Umhüllungsmaterial, wie Papier, umhüllt ist, also ein Zigarettenstrang, dessen Durchmesser i.d.R. im Bereich von etwa 6 bis ca. 10 mm liegt. Die Größe der Endfläche, die bspw. im Wesentlichen rechteckig sein kann, ist vorzugsweise kleiner als 1/10 der auf eine Wand der Resonatoreinrichtung zu projizierende Fläche des Materialstroms. Hierunter ist bspw. ein Flächenverhältnis gemeint, wie in Fig. 2 dargestellt ist, wobei die in Fig. 2 dargestellte Querschnittsfläche des Zigarettenstrangs im Hohlraum 7 als maßgebliche Fläche gemeint ist.

Vorzugsweise ist der Leitungsresonator ein dünner Quader aus Metall, der in Richtung des Prüfbereichs eine Endfläche aufweist. Wenn vorzugsweise wenigstens eine Innenwand des Resonatorgehäuses als Elektrode, insbesondere als Gegenelektrode zur Endfläche, dient, kann das elektromagnetische Wellenfeld zwischen der Endfläche des Metallstreifens und dieser Innenwand aufgebaut werden, so dass ein definierter eng begrenzter Messbereich gegeben ist.

Vorzugsweise sind die beiden Endflächen im Wesentlichen parallel zueinander, wodurch die Homogenität des Wellenfeldes weiter erhöht wird.

Wenn das eine Element wenigstens teilweise aus einem Material mit einem niedrigen Ausdehnungskoeffizienten, insbesondere bezüglich der Temperatur, besteht, sind sehr verlässliche und genaue Messungen möglich. Wenn ferner vorzugsweise der Metallstreifen mit einem korrosionsbeständigen Material, insbesondere Gold, beschichtet ist, ist eine entsprechende Langlebigkeit der Resonatoreinrichtung gegeben.

Eine Messeinrichtung, insbesondere Mikrowellenmesseinrichtung, für die Prüfung einer Materialmenge, insbesondere eines Materialstroms der Tabak verarbeitenden Industrie, auf Vorhandensein wenigstens eines Fremdmaterials und/oder für die Erfassung der Masse, Dichte und/oder der Feuchte der Materialmenge, mit wenigstens einem Resonatorgehäuse, die wenigstens eine Durchtrittsöffnung für die Materialmenge aufweist und in dem ein elektromagnetisches Feld erzeugbar ist, zeichnet sich dadurch aus, dass die Messeinrichtung wenigstens zwei Resonatorgehäuse umfasst, die jeweils einen Messbereich definieren, wobei die elektromagnetischen Felder jeweils ein elektrisches Feld umfassen, die in den jeweiligen Messbereichen in zueinander verschiedenen Richtungen im Raum orientiert sind. Hierbei ist vorzugsweise das elektromagnetische Feld ein Mikrowellenfeld, das in dem Resonatorgehäuse ein stehendes Mikrowellenfeld umfasst. Die zueinander verschiedenen Richtungen der elektrischen Felder ermöglichen erfindungsgemäß die genauere Bestimmung von Fremdkörpern, da Fremdkörper, die mittels des einen Resonatorgehäuses nicht erfasst werden, dann mit großer Wahrscheinlichkeit mittels des anderen Resonatorgehäuses erfasst werden können. Hierbei ist insbesondere an Fremdkörpern zu denken, die eine geometrische Form aufweisen, die in eine Richtung größer ist als in eine andere Richtung. Die zueinander verschiedenen Richtungen im Raum der Felder bedeuten insbesondere, dass diese Felder in unterschiedlichen Winkeln zur Förderrichtung ausgeprägt sind.

Dabei liegen die Messbereiche in Förderrichtung des Materialstromes hintereinander, so dass eine getrennte Auswertung der entsprechenden Messungen der Materialmenge in den Messbereichen erfolgen kann und so dass eine Beeinflussung der jeweiligen Messbereiche durch den benachbarten Messbereich nicht stattfindet.

Die elektrischen Felder können im Wesentlichen orthogonal zueinander orientiert sein. Im Rahmen dieser Erfindung bedeutet orthogonal insbesondere senkrecht zueinander.

Wenn ein elektrisches Feld im Wesentlichen in Förderrichtung des Materialstroms orientiert ist und ein elektrisches Feld quer dazu, kann zum einen auf herkömmliche Art und Weise wie bspw. in der DE 198 54 550 A1 beschrieben ist, entsprechend eine Messung erfolgen und zum anderen eine zusätzliche und ergänzende Messung quer zu dieser Richtung.

Im Rahmen dieser Erfindung bedeutet Feld insbesondere elektrisches Feld. Eine Richtung bzw. Orientierung eines Feldes ist im Falle eines dynamischen Feldes, wie bei einer stehenden elektromagnetischen Welle, die Richtung des Feldstärkevektors.

Wenn drei Resonatorgehäuse vorgesehen sind, kann die Genauigkeit der Messung weiter erhöht werden. Hierzu ist das dritte Resonatorgehäuse vorzugsweise derart ausgestaltet, dass das elektrische Feld im Wesentlichen orthogonal zu denjenigen der anderen beiden Resonatorgehäuse ist.

Die Messeinrichtung umfasst eine erfindungsgemäße bzw. vorzugsweise ausgestaltete Resonatoreinrichtung wie vorstehend beschrieben. Eine kompaktbauende Messeinrichtung ist dann gegeben, wenn ein einziges Gehäuse wenigstens zwei Resonatorgehäuse umfasst.

Ein entsprechendes Messsystem, insbesondere Mikrowellenmesssystem, für die Prüfung eines Materialstromes der Tabak verarbeitenden Industrie, auf Vorhandensein wenigstens eines Fremdmaterials und/oder für die Erfassung der Masse, Dichte und/oder Feuchte, wenigstens eines Bereichs des Materialstroms, ist so ausgestaltet, dass wenigstens zwei Messvorrichtungen vorgesehen sind, mittels derer der Materialstrom in zueinander verschiedenen Richtungen im Raum messbar ist. Hierbei ist unter der Richtung der Messung die Richtung des für die Messung entscheidenden Feldes, insbesondere des elektrischen Feldes, zu verstehen. Hierzu ist wenigstens eine Messvorrichtung derart ausgestaltet, dass eine Messung in Förderrichtung des Materialstroms ermöglicht ist. Hierzu sei bspw. auf die DE 198 54 550 A1 verwiesen, in der bspw. eine entsprechende Messvorrichtung dargestellt ist, mittels der eine Messung in Förderrichtung des Materialstroms ermöglicht ist. Wenn wenigstens eine Messvorrichtung derart ausgestaltet ist, dass eine Messung quer zur Förderrichtung des Materialstroms ermöglicht ist, kann bspw. eine der erfindungsgemäßen Resonatoreinrichtungen, wie vorstehend beschrieben, Verwendung finden.

Es können drei Messvorrichtungen vorgesehen sein, wobei die Messvorrichtungen derart ausgestaltet sind, dass der Materialstrom in drei zueinander verschiedenen Richtungen, insbesondere in im Wesentlichen orthogonalen Richtungen, im Raum messbar ist. Mittels eines derartigen Messsystems sind besonders genaue Messungen, insbesondere mit einer sehr guten Ortsauflösung, möglich. Vorzugsweise ist die Messvorrichtung, die eine Messung quer zur Förderrichtung ermöglicht, eine der erfindungsgemäßen Resonatoreinrichtungen, die vorstehend beschrieben sind.

Ein entsprechendes Verfahren zur Prüfung einer Materialmenge, insbesondere eines Materialstromes der Tabak verarbeitenden Industrie, auf Vorhandensein wenigstens eines Fremdmaterials und/oder zur Erfassung der Masse, Dichte und/oder Feuchte der Materialmenge ist so ausgestaltet, dass ein erstes elektromagnetisches Feld in einem ersten Resonator erzeugt wird und ein zweites elektromagnetisches Feld in einem zweiten Resonator erzeugt wird, die Materialmenge durch das erste und das zweite Feld hindurchbewegt wird und eine Änderung wenigstens einer Eigenschaft der elektromagnetischen Felder gemessen wird.

Eine Eigenschaft der elektromagnetischen Felder kann bspw. die Feldstärke, die Frequenz oder die Phase sein. Ferner kann eine Eigenschaft eines elektromagnetischen Feldes im Falle eines stehenden Wellenfeldes bspw. bei einem Resonator die Lage der Bäuche bzw. Knoten sein oder die Resonanzfrequenz sowie auch die Amplitude.

Die elektrischen Felder können in zueinander verschiedenen Richtungen orientiert sein. Hierbei ist davon auszugehen, dass sowohl das E-Feld als auch das H-Feld in jeweils zueinander verschiedenen Richtungen orientiert sind. Wenn ein dritter Resonator vorgesehen ist, der ein drittes elektromagnetisches Feld erzeugt, wobei die Materialmenge durch das dritte Feld hindurchbewegt wird, wobei das dritte Feld in zu dem ersten Feld und dem zweiten Feld unterschiedliche Richtung orientiert ist und die Änderung wenigstens einer Eigenschaft des dritten Feldes gemessen wird, kann eine noch genauere Analyse des Materialstroms aus Fremdkörper bzw. eine noch genauere Erfassung der Dichte, Feuchte und Masse des Materialstroms ermöglicht sein.

Die elektrischen Felder können in den jeweiligen Resonatoren im Wesentlichen orthogonal zueinander sein.

Wenn die gemessenen Werte ausgewertet werden, um ein Auswurfsignal zu generieren, ist es möglich, bspw. Abschnitte des Materialstroms von der weiteren Verarbeitung auszusondern. Hierdurch wird vermieden, dass bspw. bei der Zigarettenherstellung schlecht gefüllte Zigaretten oder zu trockene Zigaretten oder Zigaretten mit einem Fremdmaterial hergestellt werden. Wenn die gemessenen Werte der Resonatoren miteinander in Beziehung gesetzt werden, ist eine sehr genaue Ortsauflösung möglich. Mittels einer derartig genauen Ortsauflösung ist der Ausschuss an gefördertem Material möglichst gering zu halten. Die Kopplung der Messergebnisse der unterschiedlichen Resonatoren erhöht also die Genauigkeit bzw. die Ortsauflösung der Messungen.

Im Folgenden wird anhand von Ausführungsbeispielen unter Bezugnahme auf die Zeichnungen die Erfindung näher erläutert, wobei zur Offenbarung aller nicht näher erläuterten erfindungsgemäßen Einzelheiten auf die Zeichnung verwiesen wird. Es zeigen:
- Fig. 1: einen Querschnitt durch ein Resonatorgehäuse in einer Aufsicht,
- Fig. 2: einen Querschnitt durch das Resonatorgehäuse aus Fig. 1 entlang der Schnittlinie A-A,
- Fig. 3: einen Querschnitt eines nicht erfindungsgemäßen Resonatorgehäuses,
- Fig. 4: einen Querschnitt des Resonatorgehäuses der Fig. 3 entlang der Schnittlinie C-C in Seitenansicht, und
- Fig. 5: eine schematische Anordnung einer Messeinrichtung.

In den folgenden Figuren sind jeweils dieselben Bezugsziffern für gleiche Elemente verwendet worden, so dass von einer erneuten Vorstellung dieser Elemente abgesehen wird.

Fig. 1 zeigt einen Querschnitt durch ein Resonatorgehäuse 4.1 in einer Aufsicht, wobei diese entlang der Pfeile B am Schnitt B-B der Fig. 2 zu betrachten ist. Es sind nur einige Merkmale in Fig. 1 dargestellt. Einige Merkmale, die in Fig. 2 dargestellt sind, wurden der Übersichtlichkeit halber in Fig. 1 nicht eingezeichnet. Ein Hohlzylinder 6 aus Metall, der vorzugsweise zumindest von innen mit einer Goldschicht 12 versehen ist, grenzt das Resonatorgehäuse 4.1 ein. In der Mitte des Hohlzylinders 6 ist ein Pfosten 19 dargestellt, der auch mit einer Goldschicht 12 belegt ist. Sowohl der Hohlzylinder 6 als auch der Pfosten 19 sind im Querschnitt dargestellt. In einer Ansicht ist in dem Innenraum 7 bzw. Hohlraum 7 ein Leitungsresonator 21 dargestellt, der ein offener Ring ist und zwei Endflächen 20 aufweist. Ferner ist eine Durchtrittsbohrung 10 für den Durchtritt eines Zigarettenstrangs 1 dargestellt.

In Fig. 2 ist der Zigarettenstrang 1 dargestellt, der teilweise aufgebrochen ist und sich in Richtung des Pfeils 5 bewegt. Der Zigarettenstrang 1 besteht aus einem Füller 3 aus Schnitttabak und einer Umhüllung 2 aus Zigarettenpapier. Der Zigarettenstrang 1 durchsetzt ein Resonatorgehäuse 4.1, dem Mikrowellen zwecks Erfassung der Masse, Dichte und/oder Feuchte des Füllers bzw. zwecks der Ermittlung, ob ein Fremdmaterial in dem Füller vorhanden ist, zugeführt werden. Das Resonatorgehäuse 4.1 weist einen Hohlkörper in Form eines Hohlzylinders 6 auf, dessen Innenraum 7 symmetrisch zu dem Pfosten 19 angeordnet ist. An dem Hohlzylinder ist ein Deckel 8 zum Verschließen angeschraubt. Sowohl Hohlzylinder 6 als auch Deckel 8 bestehen aus einem Material mit einem sehr niedrigen Temperaturausdehnungskoeffizienten. Hierzu eignet sich eine Legierung, die zumindest annähernd aus 64 % Eisen und 36 % Nickel besteht. Infolge der guten Konstanz der Geometrie des Resonatorgehäuses 4.1 lässt sich auch eine gute Konstanz der Messergebnisse erreichen. Hierzu trägt bspw. noch eine in Fig. 2 angedeutete Regelung der Temperatur des Resonatorgehäuses bei, dessen Temperatur durch einen Temperaturfühler 9 erfasst wird. Der Temperaturfühler steuert mindestens einen Heiztransistor 11, z.B. vom Typ BUZ 80 der Fa. Siemens, dessen Verlustwärme das Resonatorgehäuse vorzugsweise über Umgebungstemperatur erwärmt. Die Regelungseinrichtung selbst ist nicht in der Fig. 2 dargestellt, ist allerdings für einen Fachmann bekannt.

Der Innenraum 7 des Resonatorgehäuses 4.1 und auch vorzugsweise der Leitungsresonator 21, der hier ein offener Ring ist, ist mit einer dünnen Goldschicht 12 bedampft, die eine die Messwertkonstanz beeinträchtigende Korrosionsbildung zuverlässig verhindert und gleichzeitig, da diese elektrisch gut leitend ist, einen schädlichen Skin-Effekt verhindert. Zweckmäßigerweise wird das Resonatorgehäuse 4.1 auch von außen vergoldet, um auch Korrosion außen auszuschließen.

Zum mechanischen Abschluss des Innenraums 7 gegenüber dem Zigarettenstrang 1 und von diesem evtl. angeförderten Schmutzteilchen, also zwecks Verhinderung einer Verschmutzung des Innenraums 7, die das Messergebnis beeinträchtigen würde, dient ein Schutzrohr 13, das vorteilhaft aus einer Substanz der Polyaryletherketon (PAEK)-Gruppe, z.B. aus Polyetheretherketon (PEEK) besteht. An einem seiner Enden, an dem der Strang 1 in das Resonatorgehäuse 4 einläuft, kann das Schutzrohr 13 trichterförmig aufgeweitet sein, was allerdings in Fig. 2 aus Gründen der Übersichtlichkeit nicht dargestellt ist.

Das Resonatorgehäuse 4.1 erstreckt sich außerhalb des Innenraums 7 rohrförmig (14) auf beiden Seiten in Richtung des Strangs 1 nach außen, um den Austritt von Mikrowellen aus der Resonatorkammer zu verhindern. Es kann sich auch rohrförmig etwas nach innen erstrecken, was allerdings in Fig. 2 nicht dargestellt ist.

Zur Einkopplung der von einem Mikrowellengenerator erzeugen Mikrowellen dient eine durch eine Isolierung 16 vom Metallgehäuse 4.1 isolierte Einkoppelantenne 17. Zum Auskoppeln von Mikrowellen, die einer nicht dargestellten Auswertschaltung zugeführt werden sollen, dient eine durch eine Isolierung 16 gegenüber dem Deckel 8 isolierte Auskoppelantenne 18. Die genannten Antennen 17 und 18 können auch auf derselben Seite des Gehäuses angeordnet sein. Vorzugsweise sind diese dann in Umfangsrichtung versetzt angeordnet. Eine geeignete Auswertschaltung ist der deutschen Patentanmeldung 197 34 978.1 zu entnehmen.

Durch die Erfindung ist es nun möglich, ein eng gebündeltes Feld mit erhöhter Energiedichte vorzusehen, das insbesondere zwischen den beiden Endflächen 20 bzw. Feldaustrittsflächen 20 des Leitungsresonators 21, der in diesem Ausführungsbeispiel als ein offener Ring dargestellt ist, ausgeprägt ist. Hierdurch wird ein sehr kurzes bzw. kleines Messfenster bewirkt, was die Empfindlichkeit der Messung, insbesondere auf Fremdmaterialien, deutlich erhöht.

Der Leitungsresonator 21 ist dicht an den Koppelantennen 17 und 18 angeordnet. Zur Befestigung des Leitungsresonators sind nichtleitende Befestigungselemente vorgesehen, die das Gehäuse mit dem Leitungsresonator verbinden. Geht von dem offenen Ende der einkoppelnden Antenne 17 ein hochfrequentes elektromagnetisches Wechselfeld aus, so wird im Leitungsresonator 21 durch Influenz eine stehende Welle angeregt. Diese Welle nimmt Energie von der Einkoppelantenne 17 ab, wenn die Resonanzbedingung erfüllt ist, d.h. wenn die Wellenlänge der stehenden Welle mit der Länge L des Resonators harmoniert. Dies ist der Fall, wenn gilt: L = n x λ / 2,
wobei n eine ganze Zahl ist. Die stehende Welle im Leitungsresonator erregt ihrerseits durch Influenz eine elektromagnetische Welle in der auskoppelnden Antenne 18, die die Energie aus dem Resonator ableitet. Vorstehend wurde eine kapazitive Kopplung beschrieben. Es ist im Rahmen der Erfindung auch möglich, eine induktive Kopplung vorzusehen.

An den offenen Enden 20 des Leitungsresonators 21 befindet sich ein Spannungsbauch der stehenden Welle. Dabei ist die Polarität der Innenflächen gleich, wenn n eine gerade Zahl ist, und entgegengesetzt, wenn n eine ungerade Zahl ist. In letzterem Fall entsteht zwischen den Endflächen ein konzentriertes elektrisches Feld, das sich durch die Durchtrittsbohrung für den Zigarettenstrang erstreckt. Dies führt zu einem besonders großen Einfluss der dielektrischen Eigenschaften des Messgutes auf das Verhalten des Resonators und damit zu einer effektiven Fremdkörpererkennung.

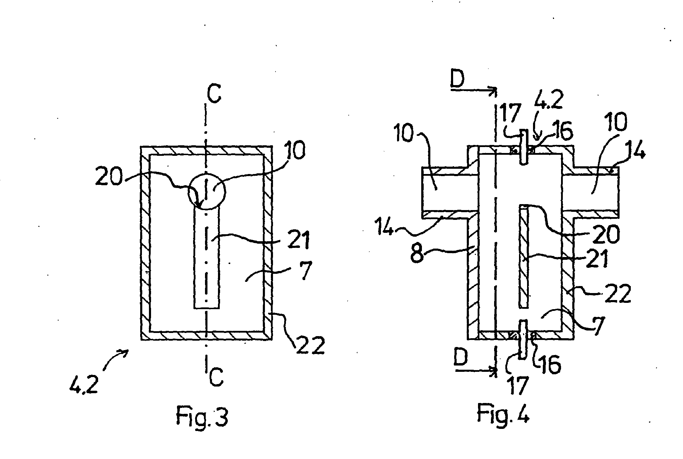

In Fig. 3 ist eine nicht erfindungsgemäße Variante dargestellt, wobei im Unterschied zu dem vorherigen, erfindungsgemäßen Ausführungsbeispiel gem. Figuren 1 und 2 ein Hohlquader 22 als Resonatorgehäuse 4.2 fungiert und ferner ein Leitungsresonator 21, der ein Metallstreifen ist. Fig. 3 ist eine Schnittdarstellung an der Schnittlinie D-D aus Fig. 4, wobei dieser Schnitt in Pfeilrichtung betrachtet wird. Fig. 4 ist eine seitliche Ansicht einer Schnittdarstellung entlang der Schnittlinie C-C aus Fig. 3. Die weiteren Merkmale, wie das Schutzrohr 13, die Goldschicht 12, der Zigarettenstrang 1 usw. sind in diesen Figuren nicht dargestellt, um die dargestellten Elemente deutlicher zu machen.

Das Feld, das von dem Leitungsresonator 21 bzw. aus der Endfläche 20 bzw. Feldaustrittsfläche 20 austritt, hat als Gegenelektrode die gegenüberliegende Gehäusewand, die dort als Masseelektrode fungiert.

Die voraufgeführten erfindungsgemäßen Ausführungsbeispiele sind besonders gut geeignet, um ein Verfahren zum Prüfen eines Produktionsmaterials gem. der deutschen Patentanmeldung 101 00 664.0 auszuführen.

Das Verfahren zum Prüfen eines Produktionsmaterials gem. der 101 00 664.0 dient insbesondere dazu, die großen Mengen von Tabak, die in der Tabak verarbeitenden Industrie automatisch verarbeitet werden, zu untersuchen, und zwar insbesondere auf Fremdmaterialien, die in den Zigaretten vorhanden sein können, wobei diese Fremdmaterialien Auswirkungen auf die Produkteigenschaften wie Aussehen, Geschmack und Abrauchwerte haben können. Hierzu wird ein Mikrowellenfeld erzeugt, die Materialmenge wird in den Wirkbereich des Mikrowellenfeldes eingebracht und die Beeinflussung des Mikrowellenfeldes wird analysiert, wobei die Ist-Werte einer ersten und einer zweiten charakteristischen Größe des Mikrowellenfeldes gleichzeitig gemessen werden, wobei ein zulässiger Wertebereich für diese Ist-Werte vorgegeben wird, und wobei geprüft wird, ob die Ist-Werte in dem zulässigen Wertebereich liegen. Es wird dann ein Signal erzeugt, wenn die Ist-Werte nicht in dem zulässigen Wertebereich liegen.

Der zulässige Wertebereich umfasst bei diesem Verfahren vorzugsweise solche Werte der beiden Größen, die bei Beeinflussung des Mikrowellenfeldes durch eine Materialmenge, wie insbesondere einen Zigarettenstrang, auftreten, die ausschließlich das Produktionsmaterial enthält. Der Materialstrom wird hierbei vorzugsweise vor oder nach dem Durchtritt durch den Wirkbereich des Mikrowellenfeldes in Abschnitte unterteilt und solche Abschnitte, bei deren Durchtritt das Signal erzeugt wird, werden nachfolgend aus dem Materialstrom ausgesondert. Der zulässige Wertebereich kann dadurch ermittelt werden, dass eine Referenzmenge des Produktionsmaterials, das kleine Fremdmaterialien enthält, durch den Wirkbereich des Mikrowellenfeldes geführt wird und die Ist-Werte, die während des Durchtritts der Referenzmenge gemessen werden, den zulässigen Wertebereich bilden. Dabei kann die Referenzmenge vorteilhafterweise mit einem Hüllenmaterial umhüllt sein.

Dieses Verfahren kann vorzugsweise mit einem weiteren Verfahren, in dem parallel und unabhängig hierzu aus den Ist-Werten derselben charakteristischen Größen des Mikrowellenfeldes wenigstens eine Eigenschaft des Produktionsmaterials bestimmt werden kann, durchgeführt werden. Diese Eigenschaft kann insbesondere die Dichte, die Masse und/oder die Feuchte von als Produktionsmaterial verwendetem Tabak sein.

Als Fremdmaterialien kommen insbesondere Metalle und Kunststoffe in Betracht, die physikalisch eine ganz andere Veränderung des Mikrowellenfeldes hervorrufen als das Wasser enthaltende Tabakmaterial. Die hohe Leitfähigkeit der Metalle führt bspw. dazu, dass die Mikrowellen stark reflektiert oder gestreut werden. Kunststoffe weisen zu Tabak deutlich unterschiedliche Dielektrizitätszahlen und Verlustfaktoren auf, so dass diese auch einfach detektiert werden können.

Bei dem Verfahren werden vorzugsweise unterschiedliche Frequenzen dem Resonator zugeführt, wobei die Transmissionsleistung bei diesen Frequenzen ermittelt wird und aus diesen Daten nach einem mathematischen Verfahren die beiden Größen oder mehrere charakteristische Größen bestimmt werden. Hierzu werden vorzugsweise Resonanzkurven verwendet und entsprechende Wertepaare ermittelt, die aufgrund der geringfügigen Verstimmung um eine Mittenfrequenz gemessen werden. Für die näheren Einzelheiten wird auf die deutsche Patentanmeldung 101 00 664.0 verwiesen.

Die in der nicht erfindungsgemäßen Variante gem. den Figuren 3 und 4 verwendeten Materialien und Beschichtungen können diejenigen sein, die bei dem Ausführungsbeispiel gem. den Figuren 1 und 2 Verwendung finden.

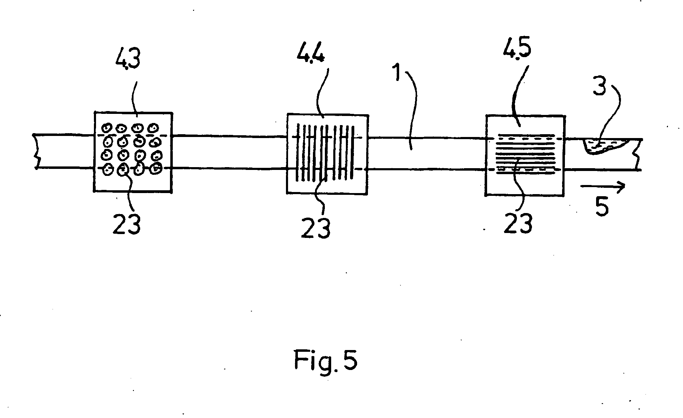

In Fig. 5 ist schematisch eine entsprechende Messeinrichtung mit drei Resonatorgehäusen 4.3 - 4.5 dargestellt. Durch die Resonatorgehäuse 4.3 - 4.5 läuft ein Zigarettenstrang 1, der mit einem Füller 3 gefüllt ist. Um den Füller 3 ist auch ein Umhüllungspapierstreifen 2 angeordnet. Die Resonatorgehäuse 4.3 - 4.5 weisen Hohlräume auf, die nicht dargestellt sind. In den Hohlräumen werden elektromagnetische Felder erzeugt, die unterschiedlich ausgerichtet elektrische Feldlinien 23 aufweisen. So verlaufen Feldlinien 23 des rechts in Fig. 5 angeordneten Resonators 4.5 in Förderrichtung 5. In dem Resonator 4.4, der in der Mitte der Fig. 5 angeordnet ist, verlaufen die Feldlinien 13 quer zur Förderrichtung 5 in der Zeichenebene und in dem linken Resonator 4.3 verlaufen die Feldlinien 23 quer zur Förderrichtung 5 und aus der Zeichenebene heraus.

Wenn das Messgut 3 bzw. 1 in verschiedenen Richtungen vom Feld durchdrungen wird, bringt jede zusätzliche Richtung weitere Messinformationen. Vorzugsweise wird in zwei oder sogar in drei Richtungen gemessen, die sowohl in Bewegungsrichtung liegen als auch senkrecht dazu. Hierdurch ist es möglich, viele Fremdkörper zu erkennen, die bspw. bei einer Messung ausschließlich in einer Richtung nicht detektiert werden würden.

Die Messsignale können anschließend getrennt ausgewertet werden, so dass ein Auswurf erfolgt, wenn mindestens einer der Sensoren bzw. Messvorrichtungen einen Fremdkörper erkennt. Die Messsignale können aber auch miteinander verknüpft werden, um die Ortsauflösung zu verbessern oder um die generelle Empfindlichkeit des Systems zu erhöhen. Der zeitliche Versatz der Messungen ergibt sich aus dem Abstand der Resonatorgehäuse der Produktionsgeschwindigkeit bzw. der Fördergeschwindigkeit des zu prüfenden Materials und ist damit leicht rechnerisch zu kompensieren.

### Bezugszeichenliste

- 1: Zigarettenstrang
- 2: Umhüllung
- 3: Füller
- 4.1 - 4.5: Resonatorgehäuse
- 5: Bewegungsrichtung
- 6: Hohlzylinder
- 7: Innenraum (Hohlraum)
- 8: Deckel
- 9: Temperaturfühler
- 10: Durchtrittsbohrung
- 11: Heiztransistor
- 12: Goldschicht
- 13: Schutzrohr
- 14: rohrförmiger Fortsatz des Resonatorgehäuses
- 16: Isolierung
- 17: Einkoppelantenne
- 18: Auskoppelantenne
- 19: Pfosten
- 20: Endfläche / Feldaustrittsfläche
- 21: Leitungsresonator
- 22: Hohlquader
- 23: Feldlinien

## Patentansprüche

1. Resonatoreinrichtung für die Prüfung einer Materialmenge, wobei die Materialmenge ein Materialstrom (3) der Tabak verarbeitenden Industrie ist, auf Vorhandensein wenigstens eines Fremdmaterials und/oder für die Erfassung der Masse, Dichte und/oder der Feuchte der Materialmenge (3), mit einem Resonatorgehäuse (4.1 - 4.5), das eine Durchtrittsöffnung (10) für die Materialmenge (3) aufweist, wobei die Materialmenge wenigstens teilweise in einen Prüfbereich überführbar ist, wobei im durch die Innenwand des Resonatorgehäuses gebildeten, das elektromagnetische Feld begrenzenden Hohlraum wenigstens ein die Energiedichte von elektromagnetischen Wellen erhöhendes Element (21) vorgesehen ist, wobei die Energiedichte in wenigstens einem Teil des Prüfbereichs erhöhbar ist, wobei das Element (21) einen Leitungsresonator (21) mit wenigstens einer als Elektrode fungierenden Endfläche (20) umfasst, wobei der Leitungsresonator (21) ein Metallstreifen ist, der zwei in Richtung des Prüfbereichs (3) ausgerichtete Endflächen (20) aufweist, wobei der Leitungsresonator (21) ein offener Ring ist.

2. Resonatoreinrichtung nach Anspruch 1, **dadurch gekennzeichnet, dass** eine Einkoppelantenne (17) und eine Auskoppelantenne (18) vorgesehen ist.

3. Resonatoreinrichtung nach einem der Ansprüche 1 oder 2, **dadurch gekennzeichnet, dass** die Größe der Endfläche (20) kleiner als eine Querschnittsfläche des Prüfbereichs ist, wobei die Querschnittsfläche im Wesentlichen parallel zur Endfläche ist.

4. Resonatoreinrichtung nach einem der Ansprüche 1 bis 3, **dadurch gekennzeichnet, dass** die beiden Endflächen (20) im Wesentlichen parallel zueinander sind.

5. Resonatoreinrichtung nach einem der Ansprüche 1 bis 4, **dadurch gekennzeichnet, dass** der Metallstreifen einen niedrigen Ausdehnungskoeffizienten besitzt.

6. Resonatoreinrichtung nach einem der Ansprüche 1 bis 5, **dadurch gekennzeichnet, dass** der Metallstreifen mit einem korrosionsbeständigen Material (12), insbesondere Gold, beschichtet ist.

7. Resonatoreinrichtung nach einem der Ansprüche 1 bis 6, **dadurch gekennzeichnet, dass** die Resonatoreinrichtung eine Mikrowellenresonatoreinrichtung ist.

## Claims

1. Resonator device for testing a material quantity, the material quantity being a material flow (3) in the tobacco-processing industry, for existence of at least one foreign material and/or for detecting the mass, density and/or humidity of the material quantity (3), having a resonator housing (4.1 - 4.5) which has a through-opening (10) for the material quantity (3), the material quantity being transferable at least partly into a testing region, there being provided in the cavity which is formed by the inside wall of the resonator housing and delimits the electromagnetic field at least one element (21) which increases the energy density of electromagnetic waves, the energy density being increasable in at least a portion of the testing region, the element (21) comprising a line resonator (21) with at least one end face (20) which functions as an electrode, the line resonator (21) being a metal strip having two end faces (20) oriented in the direction of the testing region (3), the line resonator (21) being an open ring.

2. Resonator device according to Claim 1, **characterised in that** a coupling-in antenna (17) and a coupling-out antenna (18) are provided.

3. Resonator device according to Claim 1 or 2, **characterised in that** the size of the end face (20) is smaller than a cross-sectional area of the testing region, the cross-sectional area being substantially parallel to the end face.

4. Resonator device according to one of Claims 1 to 3, **characterised in that** the two end faces (20) are substantially parallel to one another.

5. Resonator device according to one of Claims 1 to 4, **characterised in that** the metal strip has a low coefficient of expansion.

6. Resonator device according to one of Claims 1 to 5, **characterised in that** the metal strip is coated with a corrosion-resistant material (12), in particular gold.

7. Resonator device according to one of Claims 1 to 6, **characterised in that** the resonator device is a microwave resonator device.

## Revendications

1. Dispositif résonateur pour l'analyse d'une quantité de matière, ladite quantité de matière étant un courant de matière (3) de l'industrie de transformation du tabac, l'analyse portant sur la présence d'au moins une matière étrangère et/ou sur la détection de la masse, de la masse volumique et/ou de l'humidité de la quantité de matière (3), comportant un boîtier de résonateur (4.1 - 4.5), qui comprend une ouverture de passage (10) pour la quantité de matière (3), la quantité de matière pouvant au moins partiellement être transférée dans une zone de test, au moins un élément (21) augmentant la densité d'énergie d'ondes électromagnétiques étant prévu dans la cavité formée par la paroi intérieure du boîtier du résonateur et délimitant le champ électromagnétique, la densité d'énergie pouvant être augmentée dans au moins une partie de la zone de test, l'élément (21) comportant un résonateur à lignes (21) comportant au moins une surface terminale (20) jouant le rôle d'électrode, le résonateur à lignes (21) étant une bande métallique, qui comprend deux surfaces terminales (20) dirigées dans la direction de la zone de test (3), le résonateur à lignes étant un anneau ouvert.

2. Dispositif résonateur selon la revendication 1, **caractérisé en ce qu'**une antenne d'entrée (17) et une antenne de sortie (18) sont prévues.

3. Dispositif résonateur selon l'une des revendications 1 à 2, **caractérisé en ce que** l'aire de la surface terminale (20) est inférieure à l'aire de la section transversale de la zone de test, la section transversale étant pour l'essentiel parallèle à la surface terminale.

4. Dispositif résonateur selon l'une des revendications 1 à 3, **caractérisé en ce que** les deux surfaces terminales (20) sont pour l'essentiel parallèles l'une à l'autre.

5. Dispositif résonateur selon l'une des revendications 1 à 4, **caractérisé en ce que** la bande métallique présente un faible coefficient de dilatation.

6. Dispositif résonateur selon l'une des revendications 1 à 5, **caractérisé en ce que** la bande métallique est revêtue d'un matériau (12) résistant à la corrosion, en particulier l'or.

7. Dispositif résonateur selon l'une des revendications 1 à 6, **caractérisé en ce que** le dispositif résonateur est un dispositif résonateur à micro-ondes.
